# EUROPEAN PATENT SPECIFICATION

(11) **EP 0 435 111 B1**
(45) Date of publication and mention of the grant of the patent: **25.09.1996**
(21) Application number: 90124242.0
(22) Date of filing: 14.12.1990
(51) Int. Cl.: G01N 15/14

(54) **Apparatus for optically measuring specimen**
Vorrichtung zur optischen Messung einer Probe
Appareil pour mesurer de façon optique un échantillon

(30) Priority: 15.12.1989 JP 325001/89; 15.12.1989 JP 325011/89; 26.01.1990 JP 16553/90; 21.11.1990 JP 318978/90; 21.11.1990 JP 318986/90; 21.11.1990 JP 318988/90; 21.11.1990 JP 318989/90
(43) Date of publication of application: 03.07.1991
(73) Proprietor: CANON KABUSHIKI KAISHA, Tokyo (JP)
(72) Inventor: Itoh, Yuji, c/o Canon Kabushiki Kaisha, Kawasaki-Shi, Kanagawa-ken (JP); Toge, Yoshiyuki c/o Canon Kabushiki Kaisha, Kawasaki-Shi, Kanagawa-ken (JP); Saito, Atsushi c/o Canon Kabushiki Kaisha, Kawasaki-Shi, Kanagawa-ken (JP); Yamazaki, Tatsuya c/o Canon Kabushiki Kaisha, Kawasaki-Shi, Kanagawa-ken (JP)
(74) Representative: Weser, Wolfgang

(56) References cited:
- US-A- 4 243 318
- US-A- 4 548 499
- US-A- 4 573 796
- US-A- 4 727 020
- CYTOMETRY, vol. 2, no. 4, 1982, pages 226-231, Society of Analytical Cytology, US; J.A. STEINKAMP et al.: "Three-color fluorescence measurements on single cells excited at three laser wavelengths"

## Description

### BACKGROUND OF THE INVENTION

### Field of the Invention

The present invention relates to a method and apparatus for radiating light on each specimen to perform optical measurement, thereby analyzing the specimen.

### Related Background Art

As a conventional specimen inspection apparatus, a flow cytometer is known, and is widely used in biological fields and medical fields. The detailed arrangement of the flow cytometer is described in, e.g., U.S.P. Nos. 4,243,318, 4,599,307, 4,710,635, 4,727,020, and the like.

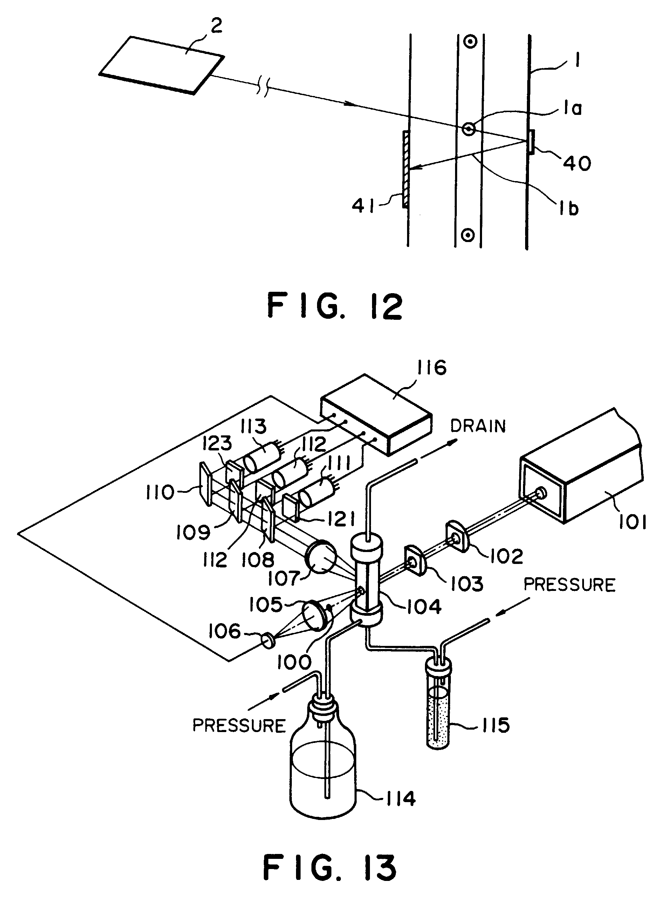

Fig. 13 shows a typical arrangement of the flow cytometer. A sample liquid such as blood is dyed with, e.g., a fluorescence reagent in a pre-treatment, thereby adjusting it to have proper reaction time and dilution concentration. The sample liquid is put into a sample liquid chamber 115. A sheath liquid such as distilled water or physiologic saline is put into a sheath liquid chamber 114. The sample liquid chamber 115 and the sheath liquid chamber 114 are respectively compressed by a compression mechanism (not shown). According to the laminar sheath flow principle, the sample liquid is laminated in the sheath liquid in a flow cell 104, and is converged to a small flow. The small flow passes an almost central portion of a communication portion in the flow cell 104. In this case, individual particles to be examined (cells, microbes, carrier particles, and the like), i.e., specimens are separated, and sequentially flow in units of particles or masses. A laser beam emerging from a laser light source 101 is converged into an arbitrary pattern by a set of cylindrical lenses 102 and 103 whose generant directions respectively correspond to a communication portion direction, and a direction perpendicular to the communication portion direction, and the converged beam is radiated on the flow of specimens. The pattern of the light beam radiated onto the specimens is preferably an elliptic pattern having a major axis extending in a direction perpendicular to the flow. This is to radiate a light beam onto the specimens at a uniform intensity even if the position of the flow of specimens slightly varies in the overall flow.

When the light beam is radiated on the specimens, scattered light is generated. Of the scattered light components, a forward scattered light component generated in a forward direction of an optical path is optically detected by a condenser lens 105 and a light detector 106. In order to prevent the radiated light beam from being directly incident on the light detector 106, a small light absorbing stopper 100 is arranged in front of the condenser lens 105 in the optical path, thereby removing direct light from a radiation light source, and transmission light transmitted through the specimens. Thus, only scattered light components from the specimens can be optically detected.

Of the scattered light components, light components generated in a sideward direction perpendicular to a laser optical axis and the flow of specimens are condensed by a condenser lens 107. The condensed light beam is reflected by a dichroic mirror 108, and sideward scattered light is optically detected by a light detector 111 via a band-pass filter 121 for selectively allowing light having a wavelength of scattered light, i.e., a wavelength of the laser beam (488 nm for an Ar⁺ laser) to pass therethrough. If the specimens are dyed with a fluorescence reagent, in order to optically detect a plurality of colors of fluorescence light components generated together with scattered light, of fluorescence light components condensed by the condenser lens 107 and transmitting through the dichroic mirror 108, a green fluorescence light component is detected by a set of a dichroic mirror 109, a band-pass filter 122 for a green fluorescence light wavelength (near 530 nm), and a light detector 112, and a red fluorescence light component is detected by a set of a total reflection mirror 110, a band-pass filter 123 for a red fluorescence light wavelength (near 570 nm), and a light detector 113. Signals from the light detectors 106, 111, 112, and 113 are input to a calculator 116. The calculator 116 performs calculations for analyzing kinds and natures of particles or measuring an antigen-antibody reaction.

In order to optically detect a plurality of colors of fluorescence light components, however, special-purpose light detectors are used in units of fluorescence light components. An arrangement for simultaneously optically detecting two colors, i.e., red and green fluorescence light components, or three colors including a yellow fluorescence light component in addition to the former two colors has been popular so far. In recent years, however, demand for an increase in the number of colors has arisen, and new fluorescence agents have been developed. When the number of fluorescence light channels to be used at the same time is increased, the number of light detectors must be increased accordingly. That is, an optical arrangement is complicated, and a large number of expensive light detectors such as photomultipliers are necessary.

U.S.P. No. 4,243,318 discloses a system wherein two laser beams having different wavelengths are radiated along a flow direction, and fluorescence light components respectively generated from specimens dyed with two kinds of fluorescence dyes matching with the wavelengths of the two laser beams are detected by a common light-receiving means. However, in this system, since sideward scattered light simultaneously reaches a light detection means together with a target fluorescence light component, it is difficult to precisely detect a target fluorescence light component. Furthermore, when a plurality of colors of fluorescence light components are simultaneously generated, they cannot be separately detected. Therefore, this system cannot be used for measuring two or more colors of fluorescence light components.

U.S.P. Nos. 4,599,307, 4,710,635, and 4,727,020 disclose arrangements for commonizing a light detector for receiving time-serially generated forward scattered light components. However, this arrangement does not commonize the light detector commonized in association with fluorescence light or sideward scattered light, and has no arrangement for selecting only a target light component. Thus, light components other than a target light component are undesirably mixed and detected.

### SUMMARY OF THE INVENTION

It is an object of the present invention to provide a system wherein light components from specimens are time-serially and optically detected so as to obtain measurement parameters more than the number of light detectors.

It is another object of the present invention to provide a system which can measure a plurality of colors of fluorescence light components more than the number of light detectors.

It is still another object of the present invention to provide a system with high versatility, which can flexibly cope with a large number of kinds of fluorescence dyestuffs.

It is still another object of the present invention to provide a simple system which can measure specimens simultaneously dyed with three or more kinds of fluorescence dyestuffs using a simple arrangement.

It is still another object of the present invention to provide a system which can measure a plurality of light components having different polarization characteristics more than the number of light detectors.

It is still another object of the present invention to provide a high-precision system which can precisely detect light components using a single light detector even if time-serially generated light components have a large difference in light amount.

It is still another object of the present invention to provide a stable system which can cancel data sampling when a measurement error occurs.

It is still another object of the present invention to provide a system with high versatility, which can switch between a time-serial detection mode and a standard detection mode according to measurement conditions, and can cope with multi-purpose applications.

### BRIEF DESCRIPTION OF THE DRAWINGS

Figs. 1 and 2 are diagrams showing the first embodiment of the present invention;
Fig. 3 is a diagram showing a modification of an optical system of the first embodiment;
Figs. 4(A) to 4(F) are signal waveform charts of respective portions of the first embodiment;
Figs. 5 and 6 are diagrams showing the second embodiment of the present invention;
Figs. 7(A) to 7(E) are signal waveform charts of respective portions of the second embodiment;
Fig. 8 is a diagram showing the third embodiment of the present invention;
Figs. 9 and 10 are diagrams showing the fourth embodiment of the present invention;
Figs. 11A to 12 are diagrams showing modifications of a radiation optical system; and
Fig. 13 is a diagram showing a conventional arrangement.

### DETAILED DESCRIPTION OF THE PREFERRED EMBODIMENTS

### [First Embodiment]

An embodiment of the present invention will be described in detail below with reference to the accompanying drawings.

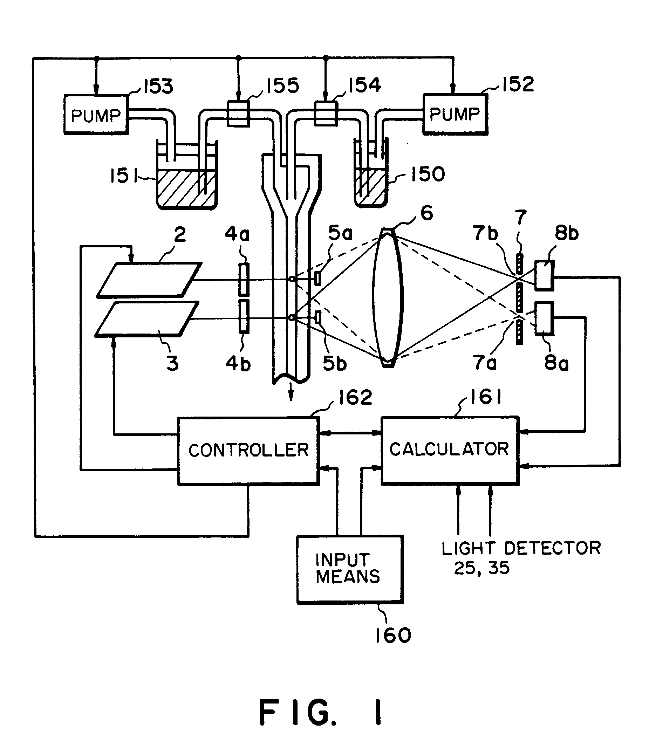

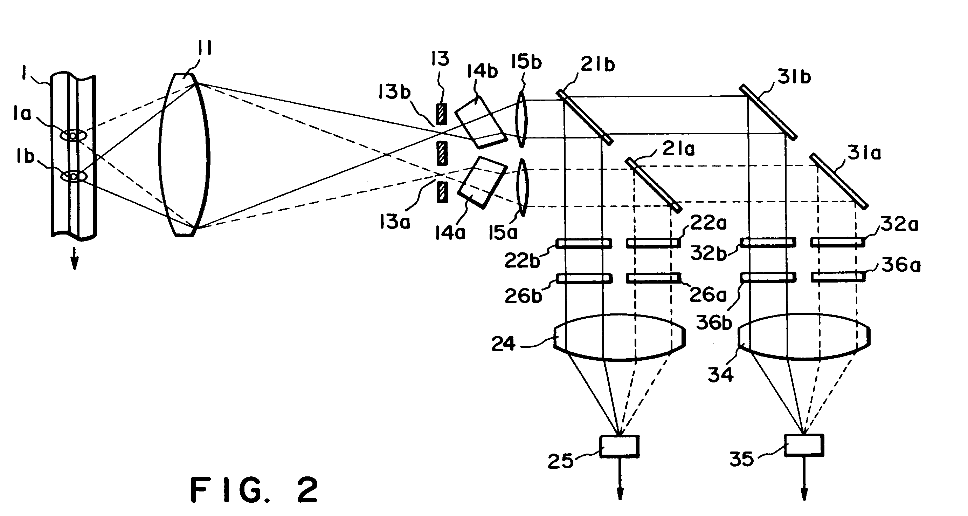

Figs. 1 and 2 are diagrams showing the first embodiment of the present invention. Fig. 1 shows a basic arrangement of the first embodiment, and illustrates the overall system having a forward optical system, a fluid system, a control system, and the like. In Fig. 1, a flow cell 1 forms a so-called sheath flow for separating particles to be examined (e.g., cells of a living body, carrier particles, and the like; to be referred to as specimens hereinafter) in a sample liquid one by one to be laminated in a sheath liquid, and flowing these particles in turn. Particles to be examined flow downward through the drawing surface, i.e., through a communication portion in the flow cell 1. A fluid system for forming the sheath flow comprises a sample liquid chamber 150 for storing a sample liquid such as a blood sample, an immunoreaction liquid, or the like, a pump 152 for compressing the sample liquid, an electrical regulator 154 for regulating a flow rate of the sample liquid, a sheath liquid chamber 151 for storing a sheath liquid such as physiologic saline, a pump 153 for compressing the sheath liquid, an electrical regulator 155 for regulating a flow rate of the sheath liquid, and a tube for connecting these components in a fluid manner, and guiding the liquids into the flow cell 1. The interior of the sample liquid chamber 150 is compressed by the pump 152 to push out the sample liquid. Meanwhile, the interior of the sheath liquid chamber 151 is compressed by the pump 153 to push out the sheath liquid. Then, states in the flow cell 1, i.e., flow velocities, flow intervals of individual particles, and the like are set under the flow-rate regulation by the regulators 154 and 155. Note that the present invention is not limited to a compression mechanism comprising the pumps and regulators, described above. For example, an arrangement using a syringe disclosed in, e.g., U.S. S.N. 476,771 may be employed, so that a push-out velocity of the syringe may be regulated.

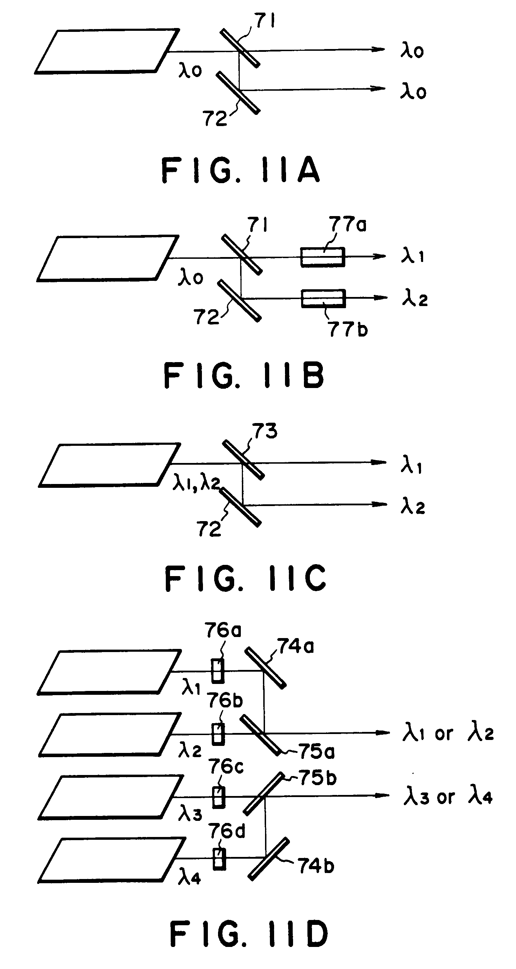

A forward optical system will be described below. This system includes laser light sources 2 and 3 having different wavelengths. These laser light sources comprise lasers such as an Ar⁺ laser, an He-Ne laser, a dye laser, a semiconductor laser, and the like which are popular in this field. Furthermore, the present invention is not limited to a laser, but various other light sources may be utilized. Note that, as shown in Fig. 11D, three or more laser light sources are prepared, and laser beams from these light sources are selectively guided to radiation optical paths in accordance with measurement conditions. Thus, a versatile system which can allow further multi-purpose measurements can be realized. The system shown in Fig. 11D includes a total reflection mirror 74, a half mirror 75, and an optical shutter 76.

Referring back to Figs. 1 and 2, the forward optical system also includes focusing lenses 4a and 4b for focusing radiation light beams on examination regions of the flow cell portion. These lenses focus laser beams from the laser light sources 2 and 3 at positions 1a and 1b in the flow cell, respectively. Each focused beam spot preferably has an elliptic pattern having a major axis in a direction perpendicular to the flow. A distance between the two radiation positions 1a and 1b is about 100 µm, and is larger than a size of a particle to be measured but is sufficiently smaller than a flow interval of sequentially flowing particles. Light stoppers 5a and 5b are arranged in a beam straight travel direction to shield the laser beams from the laser light sources 2 and 3, thereby forming dark field optical systems. The forward optical system also includes a focusing lens 6 for focusing forward scattered light, a field stop 7 having apertures 7a and 7b at conjugate positions corresponding to the positions 1a and 1b, and light detectors 8a and 8b for detecting forward scattered light from the positions 1a and 1b.

The two laser light sources need not always be prepared to form two laser beams. For example, as shown in Figs. 11A, 11B, and 11C, a beam from a single laser light source may be split into two beams by a mirror member. In this case, if an arrangement shown in Fig. 11B or 11C is employed, a plurality of beams having different wavelengths can be obtained. Fig. 11A shows an optical system for splitting a laser beam from a single mode laser having a short wavelength into two laser beams having the same wavelength using the half mirror 71 and the total reflection mirror 72. Fig. 11B shows an optical system for splitting a laser beam into two laser beams using the half mirror 71 and the total reflection mirror 72, and wavelength-modulating these split beams using wavelength conversion members 77a and 77b (e.g., nonlinear optical elements or AO) so as to form two laser beams having different wavelengths. Furthermore, Fig. 11C shows an optical system for splitting a laser beam from a multi-mode laser having a plurality of wavelengths into two laser beams having different wavelengths by using a dichroic mirror 73, thereby forming two laser beams having different wavelengths.

In the arrangement shown in Fig. 1, a laser beam emerging from the laser light source 2 is focused by the focusing lens 4a, and is radiated on the examination region 1a. When specimens pass through the examination region 1a, they cause light scattering. At this time, if the specimens are dyed with fluorescence colors, fluorescence light is also excited, and is generated together with scattered light. Some of the generated scattered light components propagate forward along the optical path, and become forward scattered light components. The forward scattered light components are intensity-detected by the light detector 8a via the focusing lens 6 and the aperture 7a of the field stop 7, thus obtaining a first forward scattered signal. Similarly, a laser beam emerging from the laser light source 3 is focused by the focusing lens 4b, and is radiated on the examination region 1b. When specimens pass through this examination region 1b, forward scattered light components are intensity-detected by the light detector 8b via the aperture 7b, thus obtaining a second forward scattered signal.

A control system of this embodiment includes an input means 160 for inputting and setting various measurement conditions such as various modes of the system, flow velocities and passage intervals of specimens, kinds of fluorescence agent to be used, measurement items, and the like, a calculator 161 for receiving the outputs from the light detectors 8a and 8b, and outputs from light detectors 25 and 23 of a sideward optical system (to be described later) via variable gain amplifiers, peak hold circuits, integration circuits, A/D converters, and the like, and for storing digital data of peak values and integrated values in a memory means. Particle analysis calculations are performed based on the stored data, and calculation results are output to an output means such as a CRT, a printer, or the like. As for an analysis method, statistical processing using a histogram or cytogram is popular, and a detailed description thereof will be omitted here. The calculator 161 also has functions of calculating velocities based on two detection output timings of forward scattered light components, canceling sampling of erroneous measurement data, and the like. The control system also includes a controller 162 for systematically controlling various operation means of the system. More specifically, the controller 162 performs drive operations of the pumps 152 and 153, regulation of the electrical regulators 154 and 155, ON/OFF control of the laser light sources 2 and 3, switching of fluorescence detection levels (to be described later), and the like.

A sideward optical system will be described below with reference to Fig. 2. Fig. 2 is a side view of Fig. 1, and illustrates in detail the sideward optical system. The optical system shown in Fig. 2 includes a focusing lens 11 for focusing light components generated in a sideward direction perpendicular to the straight propagation direction of the laser beams radiated from the laser light sources 2 and 3, a field stop 13 having apertures 13a and 13b at conjugate positions corresponding to the positions 1a and 1b, parallel plates 14a and 14b, and lenses 15a and 15b. Sets of the parallel plates 14a and 14b and the lenses 15a and 15b convert light components from the positions 1a and 1b into parallel light beams. The sideward optical system also includes dichroic mirrors 21a, 21b, 31a, and 31b for color-separating sideward scattered light components and fluorescence light components generated by specimens, and band-pass filters 22a, 22b, 32a, and 32b for selecting wavelengths of corresponding fluorescence light components. Combinations of the dichroic mirrors and the band-pass filters can select corresponding detection light wavelengths. The optical system further includes ND filters 26a, 26b, 36a, and 36b having predetermined transmittances, lenses 24 and 34, and light detectors 25 and 35 for detecting sideward scattered light components and fluorescence light components. As these light detectors, photomultipliers having high detection sensitivity are preferably used. The light detectors 25 and 35 are connected to the calculator 161. Light components emerging from the position 1a are temporarily focused at the aperture 13a, are guided to the light detectors 25 and 35 along optical paths consisting of the dichroic mirrors 21a and 31a, the band-pass filters 22a and 32a, and the ND filters 26a and 36a, and are refocused on the detectors 25 and 35. On the other hand, light components emerging from the position 1b are temporarily focused at the aperture 13b, are guided toward the light detectors 25 and 35 via optical paths consisting of the dichroic mirrors 21b and 31b, the band-pass filters 22b and 32b, and the ND filters 26b and 36b, and are refocused on the detectors 25 and 35.

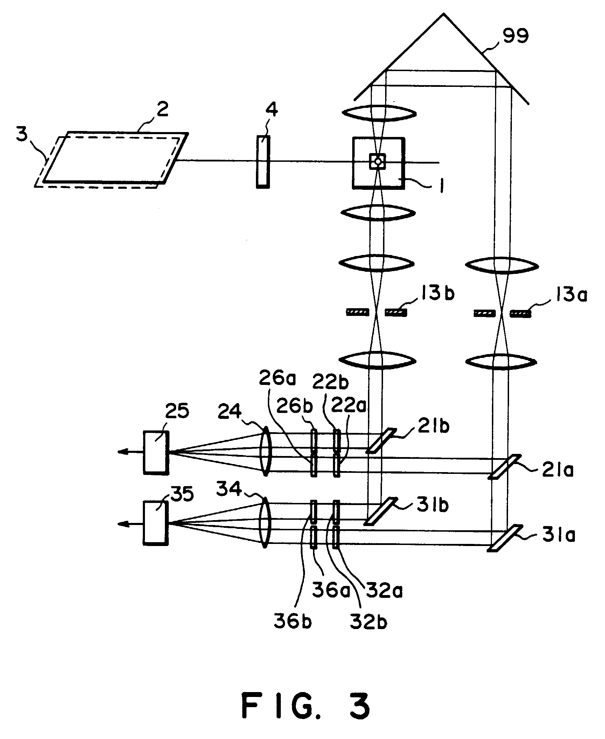

Fig. 3 shows a modification of the sideward optical system, and is a plan view of Fig. 1. Note that the forward optical system is omitted from Fig. 3. The same reference numerals in Fig. 3 denote the same or equivalent parts as in Figs. 1 and 2.

Sideward light components emerging from the radiation position 1a of the laser beam from the laser light source 2 is guided along an optical path in an upper portion of Fig. 3, and is temporarily focused at the aperture stop 13a via a reflection member 99 such as a corner cube or a Porro prism. The focused light components are refocused and incident on the light detectors 25 and 35. On the other hand, sideward light components emerging from the radiation position 1b of the laser beam from the laser light source 3 are guided along an optical path in a lower portion of Fig. 3, and are temporarily focused at the aperture stop 13b. Thereafter, the focused light components are refocused on and detected by the common light detectors 25 and 35. The arrangement of this modification is basically the same as the optical system shown in Fig. 2. However, the characteristic feature of this modification is that optical paths for detecting fluorescence light components from the positions 1a and 1b are distinctly separated and optically arranged.

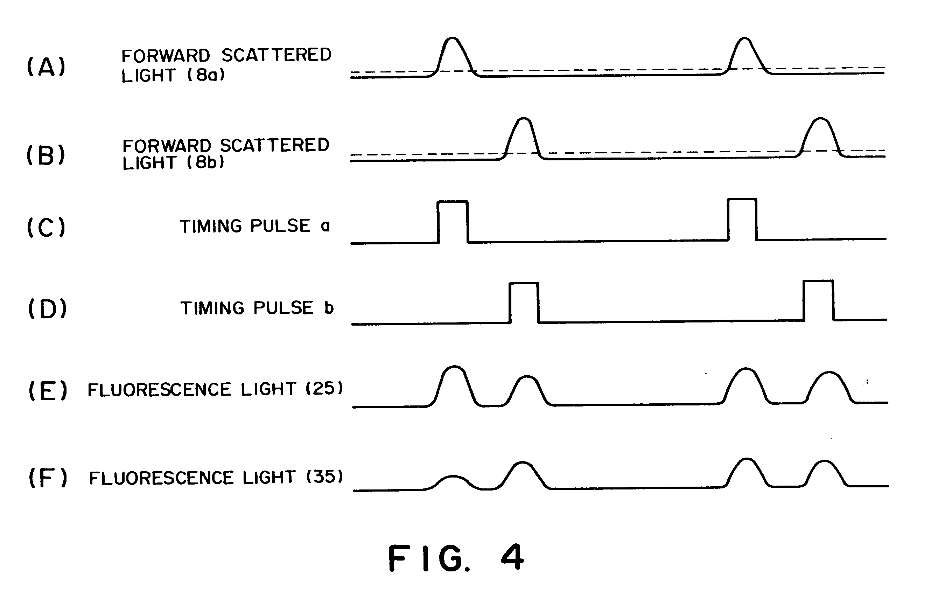

Figs. 4(A) to 4(F) show detection pulses obtained by the respective light detectors. Figs. 4(A) and 4(B) respectively show detection outputs of forward scattered light components obtained by the light detectors 8a and 8b, respectively, Figs. 4(C) and 4(D) show timings pulses generated by comparing the outputs shown in Figs. 4(A) and 4(B) with a predetermined threshold value, respectively, and Figs. 4(E) and 4(F) show detection outputs of fluorescence light components obtained by the light detectors 25 and 35, respectively. The detection outputs of fluorescence light components by the light detectors 25 and 35 are time-serially obtained when specimens pass through the positions 1a and 1b, and are time-serially fetched by utilizing the above-mentioned timing pulses.

As described above, in this embodiment, four-channel detection can be attained by two sideward detectors. Thus, light components of a total of six kinds of different optical characteristics including two forward scattered light components in addition to the above-mentioned channels can be detected.

In the above description, the number of sideward light detectors is two. However, the number of detectors is not limited to this. If a single sideward light detector is arranged, two colors of fluorescence light components can be detected thereby like in the prior art. In this case, the arrangement of the apparatus can be much simplified. If the number of light detectors is three or more, more parameters can be obtained. The sideward light detectors need not always detect fluorescence light components but may detect sideward scattered light components.

The basic arrangement of the system has been described. Characteristic functions of the system of this embodiment will be described below.

### (1) Laser Selection According to Measurement Conditions

When the system of this embodiment is put into multi-purpose applications, two laser beam wavelengths need not always be required, and only one wavelength is required depending on measurement objects or kinds of fluorescence agent to be used. Alternatively, when an arrangement as shown in Fig. 11D is employed, i.e., when laser beams from three or more light sources are selectively radiated, an unused laser light wavelength is unnecessary.

The system of this embodiment has a function of switching between a plurality of measurement modes according to applications, and turning off an unused laser beam. More specifically, this system can switch between a first mode for simultaneously radiating two laser beams to perform time-serial measurement, and a second mode for radiating one laser beam and inactivating the other laser light source. The controller 162 independently performs ON/OFF control of the two laser light sources, and sets an unused laser light source in a sleep mode or cuts off a power supply of the laser light source. Thus, low power consumption of the system, and long service life of the lasers can be attained.

### (2) Constant Flow Velocity

Since a distance between the two laser radiation positions 1a and 1b is set to be a constant value (about 100 µm), generation timings of the two timing pulses, shown in Figs. 4(C) and 4(D), generated based on the outputs from the forward scattered light detectors 8a and 8b are compared, and a passage velocity, i.e., a flow velocity of specimens can be obtained based on a time difference between these timings. Comparison between the two timings and calculations of the flow velocity are performed by the calculator 161. The controller 162 always feeds back the flow velocity, thereby adjusting the electrical regulators 154 and 155 to attain the flow velocity set by the input means 160. In this manner, the set velocity can always be precisely maintained, and safety and measurement precision can be improved.

Note that the present invention is not limited to a compression mechanism using the pumps and the electrical regulators. For example, a compression mechanism using a syringe may be employed. In this case, a push-out velocity of the syringe is adjusted.

### (3) Cancel Sampling of Error Data

A flow interval between sequentially flowing specimens is set to be sufficiently larger than the distance between the two radiation positions 1a and 1b (about 100 µm). However, the specimens unusually flow with a very small interval, and the two specimens may reach the two positions at substantially the same time. In this case, scattered light components and fluorescence light components are generated from the two positions, and are mixed and incident on the common light detectors. As a result, mixed data are detected.

In order to prevent this, this embodiment comprises a means for detecting whether or not specimens pass the positions 1a and 1b at substantially the same time, and for, when it is determined that they pass at substantially the same time, canceling data from the detectors to inhibit sampling. More specifically, when the generation timings of the timing pulses shown in Figs. 4(C) and 4(D) coincide with each other or are very close to each other, the calculator 161 determines that the two specimens pass the two positions 1a and 1b at substantially the same time, and data from the light detectors are canceled to inhibit sampling.

As another method, the following method may be adopted. A time required for moving a specimen from the position 1a to the position 1b can be considered almost constant. Thus, during a predetermined period from when a detection pulse (output from the light detector 8a) is generated when a specimen passes the position 1a until the specimen flows and passes the position 1b, if a detection pulse is generated from the position 1a (output from the light detector 8a), it can be determined that specimens successively flow, and data sampling is canceled.

With the above-mentioned means, since error data can be prevented from being sampled, more reliable measurement can be assured.

### (4) Switch Detection Level (1)

In general, fluorescence light and scattered light have considerably different intensity levels, and an amount of fluorescence light greatly varies depending on a kind of fluorescence dyestuff. Therefore, in order to time-serially detect them using the common light detector, a detector having a very wide dynamic range is required. Thus, in this embodiment, passage light amount adjusting means (ND filters 26a, 26b, 36a, and 36b) for adjusting passage light amounts in accordance with an emission amount of fluorescence light to be used are arranged in optical paths extending to the light detectors, so that a difference between amounts of light incident on the light detectors can be minimized. In this manner, an expensive light detector having a wide dynamic range need not be arranged, and a low-cost system can be realized. Note that the present invention is not limited to the ND filters. For example, passage light amounts may be controlled by optical masks for limiting light-shielding areas of optical paths.

If a mechanism capable of exchanging ND filters or a mechanism capable of desirably varying passage light amounts is employed, and is adjusted according to fluorescence dyestuffs to be used, a system having higher versatility can be realized.

### (5) Switch Detection Level (2)

In association with switching of the intensity levels, this embodiment also a circuit for switching gains of the light detectors in accordance with kinds of light to be measured in addition to the ND filters. More specifically, a circuit for, when the outputs from the light detectors 25 and 35 are input to the calculator 161, switching the gains of the amplifiers in synchronism with passage of specimens at the positions 1a and 1b, and a detection sensitivity is switched in accordance with an emission amount of light. The gains are desirably adjusted to cope with various measurement requirements, and the gains of the amplifiers are determined in accordance with measurement conditions input from the input means.

### [Second Embodiment]

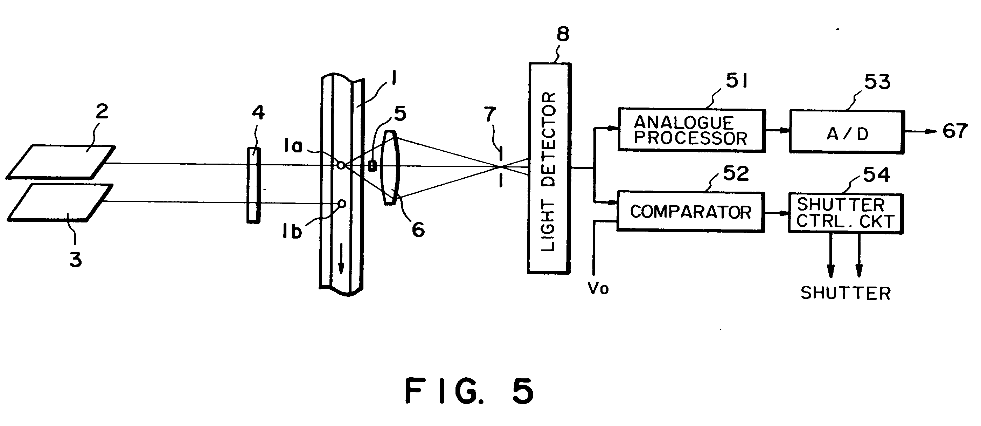

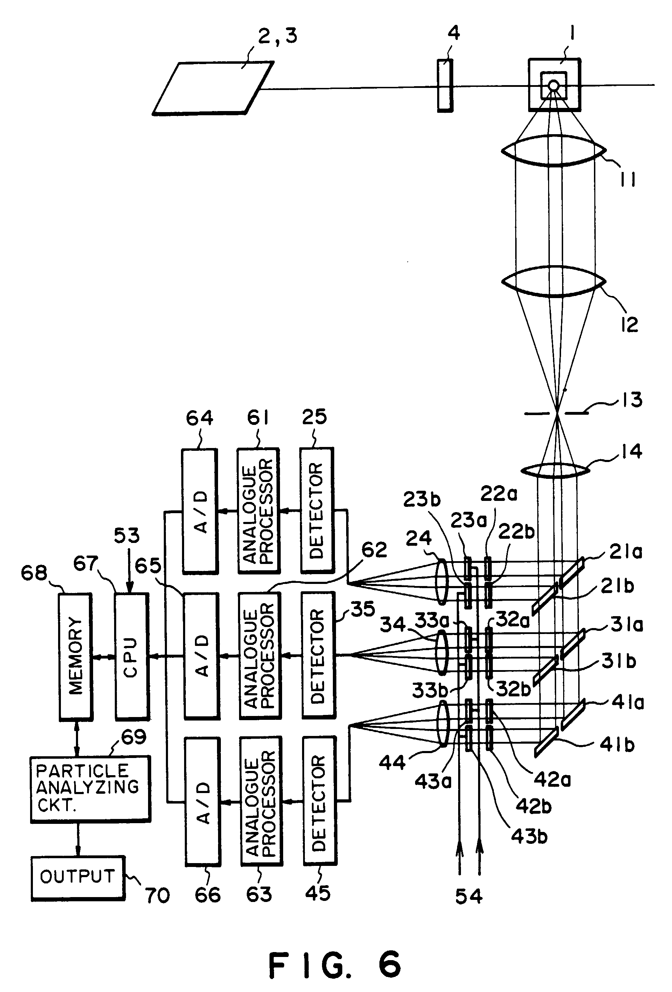

The second embodiment will be described below with reference to Figs. 5 and 6. Note that the same reference numerals in this embodiment denote the same or equivalent parts as in the first embodiment shown in Figs. 1 and 2, and different portions will be mainly described below.

Fig. 5 shows in detail a forward optical system. In this embodiment, forward scattered light is detected by a single light detector 8. However, two light detectors may be arranged like in Fig. 1. Fig. 6 is a plan view of the apparatus of this embodiment, and shows in detail a sideward detection optical system. The system shown in Fig. 6 includes shutters 23a, 33a, 43a, 23b, 33b, and 43b capable of shielding light beams. These shutters need only be high-speed shutters which can be independently driven, and may adopt various shutters such as mechanical shutters, liquid crystal shutters, AOs, Pockels cells, or the like.

A signal obtained by the light detector 8 is connected to an analogue processor 51 comprising an amplifier, a peak hold circuit, an integration circuit, and the like, and a comparator 52. The output from the analogue processor 51 is connected to an A/D converter 53. Outputs from light detectors 25, 35, and 45 are respectively connected to analogue processors 61, 62, and 63, and A/D converters 64, 65, and 66. The outputs from these A/D converters are supplied to one CPU 67. The CPU 67 is connected to a memory 68. The comparator 52 described above receives a reference voltage V₀, and its output is connected to a shutter control circuit 54. Furthermore, the output from the shutter control circuit 54 is connected to the shutters 23a, 23b, 33a, 33b, 43a, and 43b. The shutters are driven as follows. When an application voltage to a shutter is "0", the shutter is opened to allow light to pass therethrough, and when a predetermined voltage V₁ is applied to the shutter, the shutter is closed and shields light.

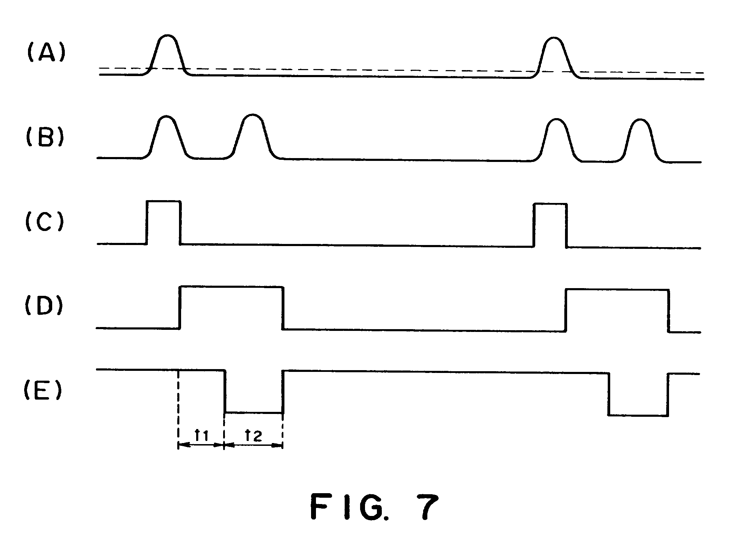

An output signal corresponding to a forward scattered light intensity obtained by the light detector 8 when a specimen passes a position 1a and crosses a laser beam is as shown in Fig. 7(A). Fig. 7(B) shows an output from the light detector 25, 35, or 45, i.e., an output signal corresponding to a sideward scattered light intensity or a fluorescence light detection intensity. When the output signal from the light detector 8 shown in Fig. 7(A) is compared with the reference voltage V₀ as a threshold value by the comparator 52, a timing pulse shown in Fig. 7(C) can be obtained.

Drive signals of the shutters 23a, 33a, and 43a are generated by the shutter control circuit 54 to close the shutters in response to the trailing edge of the timing pulse, as shown in Fig. 7(D), and to open the shutters again in response to the leading edges of the drive signals of the shutters 23b, 33b, and 43b, so that scattered light components and fluorescence light components by a laser beam L1 pass through only the shutters 23a, 33a, and 43a when a specimen passes the position 1a, and scattered light components and fluorescence light components by a laser beam L2 pass through only the shutters 23b, 33b, and 43b when a specimen passes the position 1b. The drive signals of the shutters 23b, 33b, and 43b are also generated by the shutter control circuit 54. These drive signals have the following timings, such that the shutters are opened after the lapse of t₁ seconds slightly shorter than a time required for a specimen to pass the two lasers from the trailing edge of the timing pulse signal (Fig. 7(C)), i.e., when the specimen reaches a position immediately before the position 1b, and the shutters are closed again after the lapse of t₂ seconds corresponding to a time required for the specimen to pass the position 1b, as shown in Fig. 7(E). The above-mentioned control signals perform ON/OFF control of the shutters. When a specimen passes the position 1a, the shutters 23a, 32a, and 33a are opened, and when the identical specimen passes the position 1b, the ON/OFF states of the shutters are reversed.

On the other hand, the outputs from the light detectors 25, 35, and 45 are used to measure peak values obtained when specimens pass the laser light radiation regions, area integration values, and the like in the analogue processors 61, 62, and 63 while switching gains depending on kinds of light to be measured, e.g., fluorescence light. Furthermore, analogue signals from these analogue processors are converted into digital signals by the A/D converters 64, 65, and 66. These digital signals are input to the CPU 67, and are stored in the memory 68. A specimen analysis circuit 69 performs analysis calculations based on measurement data stored in the memory 68, and calculation results are output to an output unit 70 such as a CRT, a printer, or the like.

The principle of measurement according to the present invention will be described below.

Normally, the shutters 23a, 33a, and 43a are open, and the shutters 23b, 33b, and 43b are closed. When a specimen passes through the examination region 1a, since an optical path of the shutter 23a is selected, of scatted light components and fluorescence light components generated by the specimen located in the examination region 1a, only a light component which is reflected by the dichroic mirror 21a, and has a specific wavelength (the wavelength of the band-pass filter 22a) via the band-pass filter 22a selectively reaches the light detector 25, and is detected by it. Similarly, scattered light components and fluorescence light components transmitting through the dichroic mirrors 21a and 21b are color-separated by the dichroic mirrors 31a and 31b having different wavelength characteristics, and reflected light components can reach the shutters 33a and 33b. In this case, only a light component reaching the shutter 33a is selected. Thus, only a light component which transmits through the dichroic mirror 21a, is reflected by the dichroic mirror 31a, and has a specific wavelength (the wavelength of the band-pass filter 32a) via the band-pass filter 32a is detected. Furthermore, light components transmitting through the dichroic mirrors 31a and 31b are reflected by the mirrors 41a and 41b, and reach the shutters 43a and 43b via the band-pass filters 42a and 42b having different wavelength characteristics. In this case, only a light component reaching the shutter 43a is selected. Thus, the light detector 45 detects only a light component having a specific wavelength (the wavelength of the band-pass filter 42a), which transmits through the dichroic mirrors 21a and 31a and the band-pass filter 42a.

On the other hand, when the specimen passing through the examination region 1a reaches the examination region 1b after the elapse of a predetermined period of time, the control circuit controls ON/OFF operations of the shutters, so that the shutters 23a, 33a, and 43a are closed, and the shutters 23b, 33b, and 43b are open contrary to the above-mentioned case. Thus, optical paths extending from the examination regions to the light detectors are switched. In this manner, light components having specific wavelengths selected by the band-pass filters 22b, 32b, and 42b arranged in the selected optical path are detected by the corresponding detectors.

As described above, ON/OFF operations of the two-divided shutters arranged in front of the light detectors are controlled in synchronism with passage of specimens. In other words, an optical path extending from the examination region to the light detector is divided into two paths, and the optical paths are switched in synchronism with passage of specimens. Thus, a light signal based on the first laser beam and a light signal based on the second laser beam can be time-serially distinguished from each other and can be sampled. As a result, by using the same light detectors and analogue processing system, two kinds of light signal can be measured per detector. More specifically, in the apparatus of this embodiment, which comprises three light detectors in the sideward system, six fluorescent and sideward scattered light components having different parameters can be obtained by these detectors.

As another developed aspect, when the number of divisions of the radiation positions of radiation beams, the dichroic mirrors, the band-pass filters, and shutters is set to be three or more, the number of parameters can be increased. For example, if these components are divided into three sections, three beam radiation positions are set in a flow direction, and the shutters and the like may be equally divided into three sections, as shown in Fig. 5.

The above-mentioned two embodiments exemplify the basic arrangements of the present invention. Some detailed application examples will be described below. Note that kinds and combinations of fluorescence dyestuffs to be used are not limited to those described below, as a matter of course.

### Application Example 1

In this example, specimens are simultaneously dyed with three kinds of fluorescence dyestuffs, and are detected in four channels using two light detectors in a sideward optical system.

In Figs. 1 and 2, the same two Ar⁺ laser light sources having a wavelength of 488 nm are used as the laser light sources 2 and 3. Note that in place of using two laser light sources, as shown in Fig. 11(A), a laser beam from a single light source may be optically split into two light beams using a half mirror and a total reflection mirror. In this case, it is more preferable to change an intensity ratio of the two laser beams so as to obtain intensities matching with excitation efficiencies of fluorescence agents to be used.

Kinds of fluorescence dyestuffs for dyeing specimens are selected so as to obtain fluorescence light components excited by excitation light having a wavelength of 488 nm. For example, assuming that specimens are dyed with three kinds of fluorescence dyestuffs, e.g., FITC (530 nm), PE (570 nm), and DC (610 nm), light components having four different wavelengths of 488 nm, 530 nm, 570 nm, and 610 nm are simultaneously generated from specimens. Note that the DC cannot be directly excited at the wavelength of 488 nm, but has a stepwise excitation process such that the DC is excited by a fluorescence light component (570 nm) generated when the PE is excited.

After the specimens are dyed with the above-mentioned three kinds of fluorescence dyestuffs in a pre-treatment, they are measured by the apparatus of this embodiment. The light selection wavelengths of the dichroic mirrors 21a, 21b, 31a, and 31b are respectively set to be about 510 nm, 590 nm, 450 nm, and 650 nm, and as the band-pass filters 22a, 22b, 32a, and 32b, filters having characteristics for selectively allowing light components having wavelengths near 530 nm, 488 nm, 570 nm, and 610 nm to pass therethrough are used. Thus, intensity detection operations of FITC, SS (sideward scattered light), PE, and DC are performed by the corresponding optical systems.

When a given specimen passes the position 1a, the four kinds of light components are generated. At this time, the detector 25 detects a fluorescence light intensity of the FITC selected by the band-pass filter 22a, and the detector 35 detects a fluorescence light intensity of the PE selected by the band-pass filter 32a. When the given specimen passes the position 1b the detector 25 detects an SS intensity selected by the band-pass filter 22b, and the detector 35 detects a fluorescence light intensity of the DC selected by the band-pass filter 32b.

In this manner, measurement values of light components having four different optical characteristics can be obtained by the two detectors. A total of six different measurement parameters including two different forward scattered light intensities obtained by the light detectors 8a and 8b in addition to the above-mentioned four parameters can be obtained.

### Application Example 2

An application example capable of performing 6-channel detection, i.e., capable of measuring specimens simultaneously dyed with four different fluorescence dyestuffs in the sideward optical system will be described below.

In the optical system shown in Figs. 5 and 6, or in an optical system having three light detectors obtained by adding another sideward detection system to the arrangement shown in Fig. 2, the laser light source 2 shown in Fig. 2 adopts an Ar⁺ laser light source having a wavelength of 488 nm, and the laser light source 3 adopts a dye laser light source having a wavelength of 600 nm, Note that if an arrangement shown in Fig. 11B or 11C is adopted, the apparatus can be further simplified.

Kinds of fluorescence dyestuffs for dyeing specimens are selected to obtain fluorescence light components excited by excitation light having a wavelength 488 nm, and excited by excitation light having a wavelength of 600 nm. For example, as dyestuffs suitable for 488 nm, FITC (530 nm) and PE (570 nm) are used, and as dyestuffs suitable for 600 nm, TR (610 nm) and APC (660 nm) are used. Thus, specimens are dyed with a total of four different fluorescence dyestuffs.

After the specimens are dyed with the above-mentioned four different fluorescence dyestuffs in a pre-treatment, they are measured by the apparatus of this embodiment. The light selection wavelengths of the dichroic mirrors 21a, 21b, 31a, and 31b are respectively set to be about 570 nm, 605 nm, 550 nm, and 630 nm, and as the band-pass filters 22a, 22b, 32a, 32b, 42a, and 42b, filters having characteristics for selectively allow light components having wavelengths near 488 nm, 600 nm, 530 nm, 610 nm, 570 nm, and 660 nm to pass therethrough are selected.

When a given specimen passes the position 1a where the Ar⁺ laser beam is radiated, the FITC and PE are excited by the radiation beam of 488 nm, and three different light components having wavelengths of 488 nm, 530 nm, and 570 nm are generated. At this time, the detector 25 detects SS (488 nm), the detector 35 detects the FITC, and the detector 45 detects the PE. When the given specimen passes the position 1b where the dye laser beam is radiated, the TR and APC are excited by the radiation beam of 600 nm, and three different light components having wavelengths of 600 nm, 610 nm, and 660 nm are generated. At this time, the detector 25 detects SS (600 nm), the detector 35 detects the TR, and detector 45 detects the APC.

Where the structure shown in Figs. 5 and 6 is applied in this example, the shutters are not always required. Since only light components of 488 nm, 530 nm, and 570 nm are generated by the Ar⁺ laser beam radiated on the position 1a, the respective light detectors can selectively detect the light components of these wavelengths without the shutters. Since only light components of 600 nm, 610 nm, and 660 nm are generated by the dye laser beam radiated on the position 1b, the respective light detectors can selectively detect the light components of these wavelengths without the shutters. More specifically, depending on combinations of radiation light wavelengths, kinds of fluorescence dyestuffs, and wavelength selection characteristics, the respective parameters can be detected while being distinguished from each other without using the shutters.

To generalize this, radiation beams are selected to have different wavelengths, and characteristics of first and second wavelength selection members such as band-pass filters arranged in front of light detectors are selected such that the first wavelength selection member has characteristics for selecting light having a wavelength, which is generated in response to a first radiation beam but is not generated in response to a second radiation beam, and the second wavelength selection member has characteristics for selecting light having a wavelength, which is generated in response to the second radiation beam but is not generated in response to the first radiation beam. As a result, the shutters can be omitted.

As described above, in this example, detections of a total of six channels, i.e., two channels of sideward scattered light components and four channels of fluorescence light components can be performed by three detectors in the sideward system, and light components of a total of seven different optical characteristics including forward scattered light in addition to the six parameters can be detected.

### Application Example 3

Another application example capable of performing 6-channel detection, i.e., capable of measuring specimens simultaneously dyed with four different fluorescence dyestuffs in the sideward optical system like in Application Example 2 described above will be described below.

The laser light source 2 employs an He-Ne laser light source having a wavelength of 633 nm, and the light source 3 employs an Ar⁺ laser light source having a wavelength of 488 nm. As kinds of fluorescence dyestuffs for dyeing specimens, APC (660 nm) and UL (695 nm) are selected as dyestuffs suitable for excitation light of 633 nm, and FITC (530 nm) and PI (620 nm) are selected as dyestuffs suitable for excitation light of 488 nm. Thus, specimens are multiple-dyed with these four different fluorescence dyestuffs.

The light selection wavelengths of the dichroic mirrors 21a, 21b, 31a, and 31b are respectively set to be about 640 nm, 500 nm, 670 nm, and 550 nm, and as the band-pass filters 22a, 22b, 32a, 32b, 42a, and 42b, filters having characteristics for selectively allow light components having wavelengths near 633 nm, 488 nm, 660 nm, 520 nm, 695 nm, and 620 nm to pass therethrough are selected.

Thus, 6-channel detections can be performed by the sideward optical system having three light detectors like in Application Example 2 described above.

### [Third Embodiment]

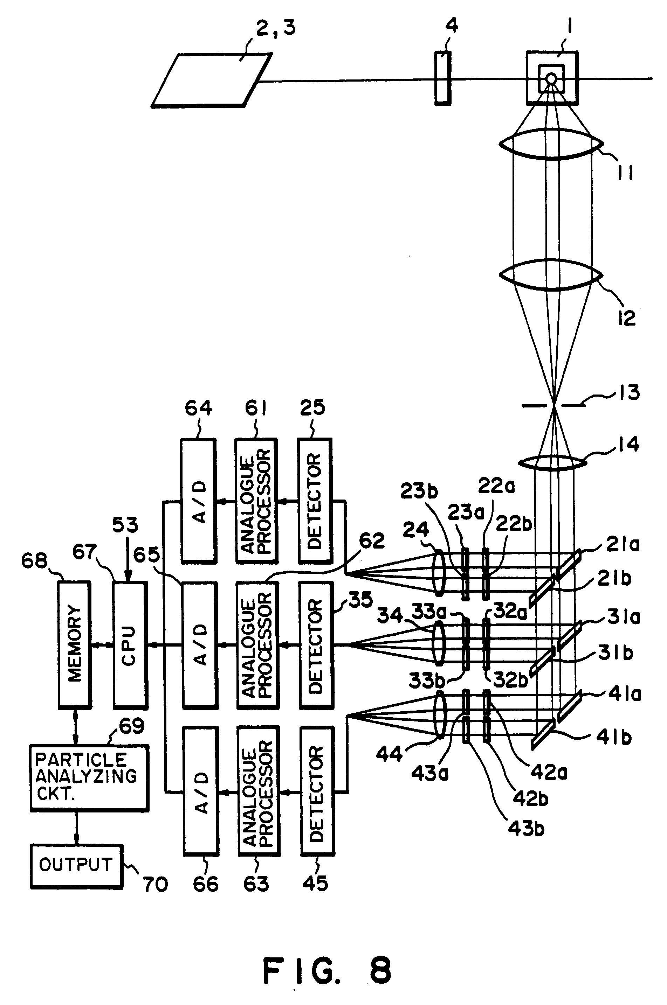

The third embodiment of the present invention will be described below with reference to Fig. 8. In place of the shutters in the above embodiments, this embodiment essentially has a shutter function by utilizing the nature of deflection of a laser beam, thus obtaining the same effects as described above. Since this embodiment has an arrangement similar to those in the above embodiments, different portions will be mainly described below. The same reference numerals in this embodiment denote the same or equivalent parts as in the above embodiments.

Laser light sources 2 and 3 comprise linearly polarized laser light sources (Ar⁺ lasers in this embodiment), and are arranged so that directions of polarization of the two laser beams are perpendicular to each other, as indicated by an arrow in Fig. 8. This arrangement can be attained by rotating the arrangement direction of one laser light source through 90° or by arranging a λ/2 plate in an optical path of one laser light source. Fig. 12 shows a modification which can obtain the same effect as in the above arrangement by a simpler arrangement. A linearly polarized laser beam emerging from the laser light source 2 is obliquely incident on a flow cell 1, and passes a position 1a of a communication portion 9. The laser beam then reaches a small phase mirror 40. The phase mirror 40 has a function of reflecting incident linearly polarized light to have a different direction of polarization. More specifically, light reflected by the phase mirror 40 and passing a position 1b has a different direction of polarization from that of light radiated on the position 1a. Light passing the position 1b is shielded by a light-shielding portion 41 arranged on a surface of the flow cell 1. Note that the phase mirror 40 also serves as a light stopper.

Members 23a, 33a, 43a, 23b, 33b, and 43b are polarization filters having characteristics for allowing only light components polarized in specific directions to selectively pass therethrough. A set of the polarization filters 23a, 33a, and 43a, and a set of the polarization filters 23b, 33b, and 43b are arranged so that their directions of polarization are perpendicular to each other. The polarization filters 23a, 33a, and 43a allow only polarized light components in the same direction as a laser beam from the laser light source 2 to pass therethrough, and shield polarized light components in other directions. The polarization filters 23b, 33b, and 43b allow only polarized light components in the same direction as a laser beam from the laser light source 3 to pass therethrough. Like in the above embodiments, gains, i.e., detection sensitivities of outputs of light detectors 25, 35, and 45 are time-serially switched in synchronism with passage of specimens depending on kinds of light components to be detected.

The principle of measurement according to the present invention will be described below.

In general, most of scattered light components and fluorescence light components (90% or more) generated when a linearly polarized laser beam is radiated on a specimen have the same polarization characteristics as those of a radiated laser beam, and a few light components are converted into polarization-canceled light components. By utilizing this nature, the arrangement directions of the filters are set, so that the polarization filters 23a, 33a, and 43a allow only light components from the position 1a where a laser beam from the laser light source 2 is radiated to pass therethrough, and the polarization filters 23b, 33b, and 43b selectively allow only light components from the position 1b where a radiated laser beam has a different direction of polarization from that of the laser beam radiated on the position 1a to pass therethrough.

When a given specimen passes the examination region 1a, since an optical path of the polarization filter 23a is selected, of scattered light components and fluorescence light components generated by the specimen in the examination region 1a, only a light component which is reflected by the dichroic mirror 21a, and has a specific wavelength (the wavelength of the band-pass filter 22a) via the band-pass filter can selectively reach the light detector 25, and is detected by it. Similarly, scattered light components and fluorescence light components transmitting through the dichroic mirrors 21a and 21b are color-separated by the dichroic mirrors 31a and 31b having different wavelength characteristics, and reflected light components can reach the polarization filters 33a and 33b. In this case, only a light component reaching the polarization filter 33a is selected. Thus, only a light component which transmits through the dichroic mirror 21a, is reflected by the dichroic mirror 31a, and has a specific wavelength (the wavelength of the band-pass filter 32a) via the band-pass filter 32a is detected. Furthermore, light components transmitting through the dichroic mirrors 31a and 31b are reflected by the mirrors 41a and 41b, and reach the polarization filters 43a and 43b via the band-pass filters 42a and 42b having different wavelength characteristics. In this case, only a light component reaching the polarization filter 43a is selected. Thus, the light detector 45 detects only a light component having a specific wavelength (the wavelength of the band-pass filter 42a), which transmits through the dichroic mirrors 21a and 31a and the band-pass filter 42a.

When the specimen passing the examination region 1a reaches the examination region 1b after the elapse of a predetermined period of time, sideward scattered light components and fluorescence light components generated by the specimen from the position 1b have a different direction of polarization from that of light from the position 1a. Since these light components in this direction of polarization are selectively guided to the light detectors by the polarization filters 23b, 33b, and 43b having a different direction of polarization from that of the polarization filters 23a, 33a, and 43a, optical paths different from those described above are selected, and light components of specific wavelengths selected by the band-pass filters 22b, 32b, and 42b arranged in the selected optical paths are detected by the corresponding detectors.

As described above, the two-divided polarization filters arranged in front of the light detectors are selected to have different directions of polarization, and are arranged in correspondence with directions of polarization of the first and second laser beams, respectively. In other words, an optical path extending from the examination region to the light detector is divided into two paths, and the optical paths are switched in synchronism with passage of specimens. Thus, a light signal having a first direction of polarization and a light signal having a second direction of polarization can be time-serially distinguished from each other and can be sampled. As a result, by using the same light detectors and analogue processing system, two kinds of light signal can be measured per detector. Since detection levels are switched depending on kinds of light components to be detected like in the above embodiments, wide-range measurement can be achieved.

Note that the above embodiment employs the polarization filters. In place of the polarization filters, polarization members having a nature of allowing only light components polarized in specific directions to pass therethrough may be adopted. For example, liquid crystal shutters may be used. In general, a liquid crystal shutter has a structure prepared by adhering two liquid crystal plates to each other. When a shutter is closed, it shields light components in all the directions of polarization. However, when the shutter is open, it serves as a kind of polarization filter, and transmits only a light component polarized in a specific direction therethrough but shields light components in other directions of polarization. Therefore, liquid crystal shutters are used in place of the polarization filter, and two liquid crystal shutters are orthogonally arranged in front of each detector, so that directions of polarization of the open shutters correspond to directions of polarization of radiation light beams. Thus, when the shutters are set in an open state, the same effects as those of the polarization filters can be obtained.

As another developed aspect, it is preferable that two liquid crystal shutters in front of each detector are subjected to opening/closing control in synchronism with passage of a specimen, so that a liquid crystal shutter for allowing light to pass therethrough is set in an open state, and a liquid crystal shutter for shielding light is set in a closed state. More specifically, when a specimen is located at the position 1a, the liquid crystal shutters at positions 23a, 33a, and 43a are set in open state, and the liquid crystal shutters located at positions 23b, 33b, and 43b are set in a closed state. When a specimen is located at the position 1b, the open/closed states of these liquid crystal shutters are reversed. In this manner, a light-shielding effect of the closed shutters can be enhanced, and an S/N ratio can be further increased.

### [Fourth Embodiment]

The fourth embodiment of the present invention will be described below. In recent years, demand has arisen for detection of other parameters such as light components in specific directions of polarization, polarization-canceled light components, and the like under the conditions including polarization in order to perform still detailed, precise analysis. This embodiment can meet this demand, and provides an apparatus which can obtain measurement parameters having polarization information more than the number of light detectors.

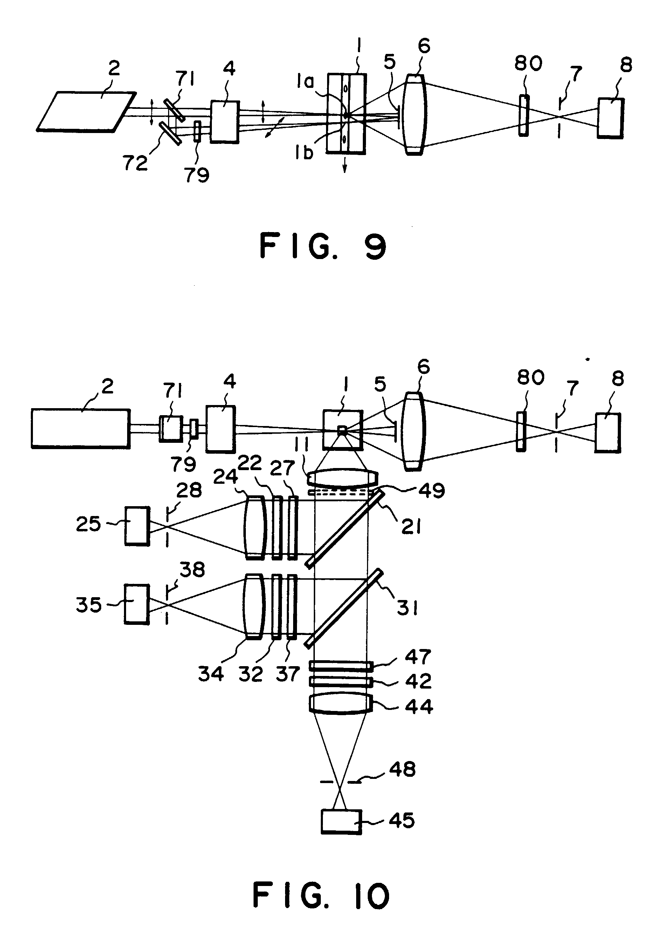

Figs. 9 and 10 are diagrams of this embodiment. A laser light source 2 comprises an Ar⁺ laser having a wavelength of 488 nm. The laser light source 2 is a linearly polarized laser beam source, and a generated laser beam is a beam linearly polarized in a predetermined direction. A laser beam emerging from the laser light source 2 is split into two beams by an optical system including a half mirror 71 and a return mirror 72. A λ/2 plate 79 is arranged in one optical path to change a direction of polarization of a light beam through 90°, so that directions of polarization of the two laser beams are perpendicular to each other. In this embodiment, the half mirror 71 has an unequal light amount division ratio, and a lower light beam has a higher intensity. However, the half mirror 71 may have an equal split ratio. Note that two laser light sources may be prepared, and may be orthogonally arranged to obtain two laser beams having orthogonal directions of polarization. In this case, the two laser beams may have different wavelengths. Alternatively, a simple optical system having the same effect as described above, as shown in Fig. 12, may be adopted.

A light stopper 5, a focusing lens 6 for focusing forward scattered light, a linearly polarized light filter 80 for selectively allowing a light component having the same direction of polarization as that of a laser beam radiated on a position 1a to pass therethrough, a field stop 7, and a light detector 8 for detecting forward scattered light are sequentially arranged in a beam straight propagation direction from the laser light source toward a flow cell, thus forming an optical system for detecting forward scattered light. Note that the field stop 7 has an aperture large enough to allow light components from both positions 1a and 1b to pass therethrough, and prevents noise light components from positions other than the positions 1a and 1b from being incident on the light detector 8. An output signal from the light detector 8 is also used as a trigger signal for determining sampling timings of light detectors.

In a direction perpendicular to the laser beam straight propagation direction, a condenser lens 11 for condensing sideward scattered light and fluorescence light, and dichroic mirrors 21 and 31 for color-separating sideward scattered light and fluorescence light generated by a specimen are sequentially arranged. In a reflection direction of the dichroic mirror 21, a linearly polarized light filter 27, a band-pass filter 22 for selecting a wavelength of about 488 nm, a focusing lens 24, a field stop 28, and a light detector 25 are arranged, thus forming an optical system for detecting sideward scattered light. In a reflection direction of the dichroic mirror for separating green and red fluorescence light components, a linearly polarized light filter 37, a band-pass filter 32 for selecting a wavelength near that of green fluorescence light, a focusing lens 34, a field stop 38, and a light detector 35 are arranged, thus forming an optical system for detecting green fluorescence light. On the other hand, in a transmission direction of the dichroic mirror 31, a linearly polarized light filter 47, a band-pass filter 42 for selecting a wavelength near that of red fluorescence light, a focusing lens 44, a field stop 48, and a light detector 45 are arranged, thus forming an optical system for detecting red fluorescence light. Each linearly polarized light filter is arranged in a direction to selectively allow polarized light in the same direction of polarization as that of a laser beam radiated on the position 1a to pass therethrough. Note that as the light detectors 25, 35, and 45, photomultipliers having high detection sensitivity are suitable. Like in the above embodiments, the gains, i.e., detection sensitivities of these light detectors 25, 35, and 45, and the light detector 8 can be time-serially switched in synchronism with passage of specimens.

A measurement operation in the apparatus with the above-mentioned arrangement will be described below.

In general, most of scattered light components and fluorescence light components (90% or more) generated when a linearly polarized laser beam is radiated on a specimen have the same polarization characteristics as those of a radiated laser beam, and a few light components are converted into polarization-canceled light components, as has been described in the above embodiment. Since polarized light and polarization-canceled light represent different pieces of information of a specimen, their light components can be used as effective information for specimen analysis.

In the flow cell, specimens sequentially flow. When a given specimen passes the examination region 1a wherein a laser beam in a specific direction of polarization, light scattering is caused by the specimen, and in this case, if the specimen is dyed with a fluorescence dyestuff, fluorescence light is also excited and generated together with scattered light.

The linearly polarized light filters 80, 27, 37, and 47 arranged in front of the light detectors are arranged in a direction for transmitting only light components having the same direction of polarization as that of a laser beam radiated on the position 1a, and shielding polarized light components in other directions, i.e., polarization-canceled light components. Thus, of the generated scattered light components, only a light component having the same direction of polarization as that of a radiated laser beam of forward scattered light is intensity-detected by the light detector 8, thus obtaining a forward scattered light signal. Of sideward scattered light components, a light component having the same direction of polarization as that of a radiated laser beam is intensity-detected by the light detector 25. Meanwhile, of fluorescence light components generated from the position 1a, a green fluorescence light component having the same direction of polarization as that of a radiated laser beam is intensity-detected by the light detector 35, and a red fluorescence light component having the same direction of polarization as that of a radiated laser beam is intensity-detected by the light detector 45. These measurement values have substantially the same meanings as parameters measured by the conventional apparatus.

When the specimen passing the examination region 1a reaches the examination region 1b after the elapse of a predetermined period of time, since a laser beam radiated on the position 1b has a direction of polarization perpendicular to that of the laser beam radiated on the position 1a, most of scattered light components and fluorescence light components generated by the specimen from the position 1b have a direction of polarization perpendicular to that of light from the position 1a. Since the linearly polarized light filters 80, 27, 37, and 47 are arranged to selectively allow light components in the same direction of polarization as that of light from the position 1a to pass therethrough, most of scattered light components and fluorescence light components from the position 1b are shielded by these linearly polarized light filters. In this case, a few light components transmitting through the filters and reaching the light detectors are some of polarization-canceled light components. More specifically, intensities of scattered light components and fluorescence light components at the position 1b detected by the light detectors have information as polarization-canceled light components. In this embodiment, the half mirror 71 has an unequal split ratio, so that an intensity of a laser beam radiated on the position 1b is set to be larger than that at the position 1b. Furthermore, upon detection of polarized light and polarization-canceled light, detection levels of the light detectors are switched, so that very weak polarization-canceled light can be detected with a higher gain. Thus, very weak polarization-canceled light can be effectively detected. The polarization-canceled light serves as information effectively used for analyzing an internal structure of each specimen.

As described above, light intensities of forward scattered light, sideward scattered light, green fluorescence light, and red fluorescence light in a predetermined direction of polarization can be obtained at the position 1a, and polarization-canceled light components of these light components can be obtained at the position 1b. More specifically, a total of eight different measurement parameters can be obtained by the four light detectors.

In order to further simplify the arrangement of the above-mentioned apparatus, the linearly polarized light filters 27, 37, and 47 shown in Fig. 10 are omitted, and a linearly polarized light filter 49 may be arranged instead at a position indicated by a dotted line, thus obtaining the same effect as described above.

In this embodiment, the polarization filters are employed. In place of the polarization filters, polarized light selection members having a nature of selecting only a light component polarized in a specific direction, e.g., liquid crystal plates, polarization mirrors, polarization beam splitters, and the like may be employed.

## Claims

1. A specimen measurement apparatus comprising:
- means for sequentially moving individual specimens; and, alternatively,
either a)
- radiation means for simultaneously radiating first and second radiation beams on first and second positions spaced apart from each other in a moving direction of the specimens;
- light detection means for time-serially detecting light components emerging from specimens passing the first and second positions using the same light detector; and
- optical selection means, arranged in an optical path between the radiation positions and said light detection means, for, when a specimen passes the first position, selectively guiding a light component having a first optical characteristic emerging from the specimen to said light detector, and for, when the specimen passes the second position, selectively guiding a light component having a second optical characteristic emerging from the specimen to said light detector,
or b)
- radiation means for time-serially radiating first and second radiation beams on individual specimens;
- light detection means for time-serially detecting light components emerging from specimens by the first and second radiation beams using the same light detector;
- first optical means for, when the first radiation beam is radiated, selectively guiding a light component having a first optical characteristic emerging from the specimen to said light detector; and
- second optical means for, when the second radiation beam is radiated, selectively guiding a light component having a second optical characteristic emerging from the specimen to said light detector.

2. An apparatus according to claim 1, wherein
said optical selection means comprises an optical selection member, arranged in a first optical path extending from the first position to said light detector, for selecting the light component having the first optical characteristic, and another optical selection member, arranged in a second optical path extending from the second position to said light detector, for selecting the light component having the second optical characteristic.

3. An apparatus according to claim 2, wherein
a first aperture stop is arranged in the first optical path at a position conjugate with the first position, a second aperture stop is arranged in the second optical path at a position conjugate with the second position, and said light detector is arranged at a position conjugate with the first and second aperture stops.

4. An apparatus according to claim 3, wherein
said optical selection members are arranged in optical paths extending from said first and second aperture stops to said light detector.

5. An apparatus according to any one of claims 1 to 4, wherein
said optical selection means comprises means for splitting an optical path extending from the first and second positions to said light detector into first and second optical paths, for, when the specimen passes the first position, selecting the first optical path, and for, when the specimen passes the second position, selecting the second optical path.

6. An apparatus according to claim 5, wherein
said optical selection means comprises a set of a first optical selection member and a first shutter, and a set of a second optical selection member and a second shutter, which are arranged in front of said light detector in the optical path to split the optical path,and means for, when the specimen passes the first position, controlling to open said first shutter and to close the second shutter, and for, when the specimen passes the second position, controlling to close the first shutter and to open the second shutter.

7. An apparatus according to any one of claims 1 to 6, wherein
said radiation means comprises a first light source for generating the first radiation beam, and a second light source for generating the second radiation beam.

8. An apparatus according to any one of claims 1 to 7, wherein
said radiation means comprises means for splitting a radiation beam from one light source into two light beams to generate the first and second radiation beams.

9. An apparatus according to any one of the preceding claims, wherein
said radiation means comprises a laser light source.

10. An apparatus according to any one of the preceding claims, wherein
the first and second light beams have different wavelengths.

11. An apparatus according to any one of the preceding claims, wherein
the optical characteristic is a wavelength of light.

12. An apparatus according to any one of the preceding claims, wherein
the optical characteristic is a polarization state of light.

13. An apparatus according to any one of the preceding claims, wherein
the specimen has a cell.

14. An apparatus according to any one of the preceding claims, wherein
the specimen has a carrier particle.

15. An apparatus according to any one of the preceding claims, further comprising
storage means for storing a value detected by said light detection means as measurement data.

16. An apparatus according to claim 15, further comprising
analysis means for analysing the specimens on the basis of the data stored in said storage means.

17. An apparatus according to claim 16, further comprising
output means for outputting an analysis result of said analysis means.

18. An apparatus according to any one of the preceding claims, further comprising
means for forming a sheath flow to sequentially allow individual specimens to pass therethrough.

19. A specimen measurement apparatus any one of the preceding claims, wherein
the radiations means comprise a first radiation means for generating the first radiation beam, and a second radiation means for generating a second radiation beam; determination means are provided for determining that a plurality of specimens pass first and second positions at substantially the same time; and
detection means on the basis of a determination result of said determination means are provided.

20. An apparatus according to claim 19, wherein
said determination means comprises: means for independently detecting a timing at which the specimen passes the first position, and a timing at which the specimen passes the second position, and comparing the two timings.

21. An apparatus according to claim 19, wherein
said determination means comprises:
means for detecting a timing at which the specimen passes the first position; and
means for detecting whether or not another specimen passes the first position within a predetermined period from the detected timing.

22. An apparatus according to any one of claims 19 to 21, comprising
speed detection means for detecting a moving speed of the specimen on the basis of a time difference between passage timings of the first and second positions of the specimen.

23. An apparatus according to claim 22, further comprising
control means for feeding back the moving speed detected by said speed detection means and controlling said means for moving the specimens to keep a setting speed.

24. An apparatus according to claim 22 or 23, wherein
said speed detection means comprises:
means for detecting a timing at which the specimen passes the first position;
means for detecting a timing at which the specimen passes the second position;
means for calculating the moving speed on the basis of a difference between the two detected timings.

25. An apparatus according to any one of claims 19 to 24, comprising:
control means for controlling a presence/absence of operations of said first and second radiation means in accordance with the set measurement mode.

26. An apparatus according to claim 25, wherein
said control means switches between a mode for operating one of said first and second radiation means, and inactivating the other radiation means, and a mode for operating both said first and second radiation means in accordance with the measurement mode set by said setting means.

27. An apparatus according to claim 26, wherein
said first and second radiation means comprise laser light sources, and when the radiation means is inactivated, said laser light source is set in a sleep mode or a power source of said light source is cut off.

28. An apparatus any one of the preceding claims, comprising
level switching means for switching detection levels between detection of the light component having the first optical characteristic and detection of the light component having the second optical characteristic.

29. An apparatus according to claim 28, wherein
said level switching means comprises light passage restriction members arranged in optical paths of said first and second optical means.

30. An apparatus according to claim 28, wherein
said level switching means comprises means for switching detection sensitivity of said light detector.

31. An apparatus according to claim 28, further comprising:
determination means for determining that a plurality of specimens pass first and second positions at substantially the same time; and
means for canceling detection by said light detector on the basis of a determination result of said determination means.

## Patentansprüche

1. Probenmeßvorrichtung, umfassend
- eine Einrichtung zum sequentiellen Bewegen individueller Proben, und, alternativ,
entweder a)
- eine Bestrahlungseinrichtung zum gleichzeitigen Lenken eines ersten und eines zweiten Bestrahlungsbündels auf eine erste und eine zweite Stelle, die in Bewegungsrichtung der Proben voneinander beabstandet sind,
- eine Lichtdetektiereinrichtung zum zeitlich seriellen Nachweisen von Lichtkomponenten, die von den Proben stammen und durch die erste und die zweite Stelle laufen, indem derselbe Lichtdetektor verwendet wird, und
- eine optische Auswahleinrichtung, die in einem optischen Weg zwischen den Bestrahlungsstellen und der Lichtdetektiereinrichtung angeordnet ist, um, wenn eine Probe die erste Stelle passiert, eine Lichtkomponente mit einer ersten optischen Eigenschaft, die von der Probe kommt, selektiv zu dem Lichtdetektor zu leiten, und um, wenn die Probe an der zweiten Stelle vorbeikommt, selektiv eine Lichtkomponente mit einer zweiten optischen Eigenschaft, die von der Probe stammt, zu dem Lichtdetektor zu leiten,
oder b)
- eine Bestrahlungseinrichtung zum zeitlich seriellen Lenken eines ersten und eines zweiten Strahlenbündels auf individuelle Proben,
- eine Lichtdetektiereinrichtung zum zeitlich seriellen Detektieren von Lichtkomponenten, die von den Proben aufgrund des ersten und des zweiten Strahlenbündels kommt, wobei derselbe Lichtdetektor verwendet wird,
- eine erste optische Einrichtung, um, wenn das erste Strahlungsbündel abgestrahlt wird, selektiv eine Lichtkomponente mit einer ersten optischen Eigenschaft, die von der Probe kommt, auf den Lichtdetektor zu leiten, und
- eine zweite optische Einrichtung, um, wenn das zweite Strahlungsbündel abgestrahlt wird, selektiv eine Lichtkomponente mit einer zweiten optischen Eigenschaft, die von der Probe kommt, auf den Lichtdetektor zu leiten.

2. Vorrichtung nach Anspruch 1, bei der
die optische Wähleinrichtung aufweist
- ein optisches Selektorglied, welches in einem ersten optischen Weg angeordnet ist, welcher von der ersten Stelle zu dem Lichtdetektor verläuft, um die Lichtkomponente mit der ersten optischen Eigenschaft auszuwählen und
- ein weiteres optisches Selektorglied, welches in einem zweiten optischen Weg, der von der zweiten Stelle zu dem Lichtdetektor verläuft, angeordnet ist, um die Lichtkomponente mit der zweiten optischen Eigenschaft auszuwählen.

3. Vorrichtung nach Anspruch 2, bei der
in dem ersten optischen Weg an einer bezüglich der ersten Stelle konjugierten Stelle eine erste Blende angeordnet ist, in dem zweiten optischen Weg an einer bezüglich der zweiten Stelle konjugierten Stelle eine zweite Blende angeordnet ist, und der Lichtdetektor an einer Stelle angeordnet ist, die bezüglich der ersten und der zweiten Blende konjugiert ist.

4. Vorrichtung nach Anspruch 3, bei der
die optischen Selektorglieder in optischen Wegen angeordnet sind, die von der ersten und der zweiten Blende zu dem Lichtdetektor verlaufen.

5. Vorrichtung nach einem der Ansprüche 1 bis 4, bei der
die optische Auswahleinrichtung aufweist
eine Einrichtung zum Aufspalten eines optischen Weges, der von der ersten und der zweiten Stelle zu dem Lichtdetektor führt, in einen ersten und einen zweiten optischen Weg, um, wenn die Probe die erste Stelle passiert, den ersten optischen Weg auszu-wählen, und um, wenn die Probe die zweite Stelle passiert, den zweiten optischen Weg auszuwählen.

6. Vorrichtung nach Anspruch 5, bei der
die optische Wähleinrichtung aufweist
einen Satz aus einem ersten optischen Selektorglied und einem ersten Verschluß und einen Satz aus einem zweiten optischen Selektorglied und einem zweiten Verschluß, die vor dem Lichtdetektor in dem optischen Weg angeordnet sind, um den optischen Weg aufzuspalten, und eine Einrichtung, um, wenn die Probe die erste Stelle passiert, das Öffnen des ersten Verschlusses und das Schließen des zweiten Verschlusses zu steuern, und dann, wenn die Probe die zweite Stelle passiert, das Schließen des ersten Verschlusses und das Öffnen des zweiten Verschlusses zu steuern.

7. Vorrichtung nach einem der Ansprüche 1 bis 6, bei der
die Bestrahlungseinrichtung eine erste Lichtquelle zum Erzeugen eines ersten Strahlungsbündels und eine zweite Lichtquelle zum Erzeugen eines zweiten Strahlungsbündels aufweist.

8. Vorrichtung nach einem der Ansprüche 1 bis 7, bei der
die Bestrahlungseinrichtung aufweist
eine Einrichtung zum Aufspalten eines von einer Lichtquelle kommenden Strahlungsbündels in zwei Lichtstrahlen, um das erste und das zweite Strahlungsbündel zu bilden.

9. Vorrichtung nach einem der vorhergehenden Ansprüche, bei der
die Bestrahlungseinrichtung eine Laserlichtquelle aufweist.

10. Vorrichtung nach einem der vorhergehenden Ansprüche, bei der
der erste und der zweite Lichtstrahl unterschiedliche Wellenlängen besitzen.

11. Vorrichtung nach einem der vorhergehenden Ansprüche, bei der
die optische Eigenschaft eine Licht-Wellenlänge ist.

12. Vorrichtung nach einem der vorhergehenden Ansprüche, bei der
die optische Eigenschaft ein Polarisierungszustand des Lichtes ist.

13. Vorrichtung nach einem der vorhergehenden Ansprüche, bei der
die Probe eine Zelle aufweist.

14. Vorrichtung nach einem der vorhergehenden Ansprüche, bei der
die Probe ein Trägerpartikel aufweist.

15. Vorrichtung nach einem der vorhergehenden Ansprüche,
gekennzeichnet durch
eine Speichereinrichtung zum Speichern eines Wertes, der von der Lichtdetektoreinrichtung nachgewiesen wurde, als Meßdaten.

16. Vorrichtung nach Anspruch 1 5, umfassend
eine Analysiereinrichtung zum Analysieren der Probe auf der Grundlage der in der Speichereinrichtung gespeicherten Daten.

17. Vorrichtung nach Anspruch 16,
mit einer Ausgabeeinrichtung zum Ausgeben eines Analyseergebnisses der Analysiereinrichtung.

18. Vorrichtung nach einem der vorhergehenden Ansprüche,
mit einer Einrichtung zum Bilden eines Mantelstroms, damit individuelle Proben sequentiell durch ihn hindurchlaufen können.

19. Probenmeßvorrichtung nach einem der vorhergehenden Ansprüche, bei der
- die Bestrahlungseinrichtung eine erste Bestrahlungseinrichtung zum Erzeugen des ersten Strahlungsbündels und eine zweite Bestrahlungseinrichtung zum Erzeugen des zweiten Strahlungsbündels aufweist,
- eine Feststellungseinrichtung zum Feststellen, daß mehrere Proben an der ersten und der zweiten Stelle im wesentlichen gleichzeitig vorbeilaufen, vorgesehen ist, und
- eine Detektiereinrichtung auf der Grundlage eines von der Feststellungseinrichtung gelieferten Feststellungsergebnisses vorgesehen ist.

20. Vorrichtung nach Anspruch 19, bei der
die Feststellungseinrichtung aufweist
eine Einrichtung zum unabhängigen Detektieren eines Zeitpunkts, zu welchem die Probe an der ersten Stelle vorbeiläuft, und eines Zeitpunkts, zu dem die Probe an der zweiten Stelle vorbeiläuft, und zum Vergleichen der beiden Zeitpunkte.

21. Vorrichtung nach Anspruch 19, bei der
die Feststellungseinrichtung aufweist
- eine Einrichtung zum Detektieren eines Zeitpunkts, zu dem die Probe an der ersten Stelle vorbeiläuft, und
- eine zweite Einrichtung zum Feststellen, ob eine weitere Probe an der ersten Stelle innerhalb einer Zeitspanne nach dem ermittelten Zeitpunkt vorbeiläuft oder nicht.

22. Vorrichtung nach einem der Ansprüche 19 bis 21, umfassend
eine Geschwindigkeitsdetektiereinrichtung zum Erfassen einer Bewegungsgeschwindigkeit der Proben auf der Grundlage einer Zeitdifferenz zwischen den Durchlaufzeitpunkten der Proben an der ersten und der zweiten Stelle.

23. Vorrichtung nach Anspruch 22,
des weiteren umfassend
eine Steuereinrichtung zum Zurückführen der von der Geschwindigkeits-Detektiereinrichtung festgestellten Bewegungsgeschwindigkeit und zum Regeln der Einrichtung zum Bewegen der Proben, um eine Sollgeschwindigkeit beizubehalten.

24. Vorrichtung nach Anspruch 22 oder 23, bei der
die Geschwindigkeits-Detektiereinrichtung aufweist
- eine Einrichtung zum Feststellen eines Zeitpunkts, zu dem die Probe an der ersten Stelle vorbeigeht,
- eine Einrichtung zum Detektieren eines Zeitpunkts, zu dem die Probe an der zweiten Stelle vorbeigeht,
- eine Einrichtung zum Berechnen der Bewegungsgeschwindigkeit auf der Grundlage einer Differenz zwischen den zwei nachgewiesenen Zeitpunkten.

25. Vorrichtung nach einem der Ansprüche 19 bis 24,
mit einer Steuereinrichtung zum Steuern des Vorhandenseins/Fehlens des Betriebs der ersten und der zweiten Bestrahlungseinrichtung entsprechend der eingestellten Meßbetriebsart.

26. Vorrichtung nach Anspruch 25, bei der
die Steuereinrichtung umschaltet zwischen einer Betriebsart zum Betreiben der ersten oder der zweiten Bestrahlungseinrichtung und zum Deaktivieren der anderen Bestrahlungseinrichtung, und einer Betriebsart, in der sowohl die erste als auch die zweite Bestrahlungseinrichtung betrieben werden, abhängig von der von der Einstelleinrichtung eingestellten Meßbetriebsart.

27. Vorrichtung nach Anspruch 26, bei der
die erste und die zweite Bestrahlungseinrichtung Laserlichtquellen aufweisen, und, wenn die Bestrahlungseinrichtung deaktiviert ist, die Laserlichtquelle in einen Schlummerbetrieb eingestellt wird, oder die Energiequelle für die Lichtquelle abgeschaltet wird.

28. Vorrichtung nach einem der vorhergehenden Ansprüche, umfassend
eine Pegelumschalteinrichtung zum Umschalten der Detektierpegel zwischen dem Detektieren der Lichtkomponente mit der ersten optischen Eigenschaft und dem Detektieren der Lichtkomponente mit der zweiten optischen Eigenschaft.

29. Vorrichtung nach Anspruch 28, bei der
die Pegelumschalteinrichtung in den optischen Wegen der ersten und der zweiten optischen Einrichtung angeordnete Lichtdurchgangs-Beschränkungsglieder aufweist.

30. Vorrichtung nach Anspruch 28, bei der
die Pegelumschalteinrichtung eine Einrichtung zum Umschalten der Detektierempfindlichkeit des Lichtdetektors aufweist.

31. Vorrichtung nach Anspruch 28, umfassend
- eine Feststellungseinrichtung zum Feststellen, daß mehrere Proben an der ersten und der zweiten Stelle im wesentlichen gleichzeitig vorbeilaufen, und
- eine Einrichtung zum Löschen der Detektierung durch den Lichtdetektor auf der Grundlage eines Feststellungsergebnisses der Feststellungseinrichtung.

## Revendications

1. Appareil de mesure d'échantillons, comportant :
- des moyens destinés à déplacer séquentiellement des échantillons individuels ; et, en alternance,
soit a)
- des moyens d'irradiation destinés à projeter simultanément des premier et second faisceaux de rayonnements sur des première et seconde positions espacées l'une de l'autre dans une direction de déplacement des échantillons ;
- des moyens de détection de lumière destinés à détecter en série dans le temps des composantes lumineuses émergeant d'échantillons passant par les première et seconde positions en utilisant le même détecteur de lumière ; et
- des moyens de sélection optique, agencés dans un chemin optique entre les positions d'irradiation et lesdits moyens de détection de lumière, pour, lorsqu'un échantillon passe par la première position, guider sélectivement une composante lumineuse ayant une première caractéristique optique émergeant de l'échantillon sur ledit détecteur de lumière, et pour, lorsque l'échantillon passe par la seconde position, guider sélectivement une composante lumineuse ayant une seconde caractéristique optique, émergeant de l'échantillon vers ledit détecteur de lumière,
soit b)
- des moyens d'irradiation destinés à projeter en série dans le temps des premier et second faisceaux de rayonnements sur des échantillons individuels ;
- des moyens de détection de lumière destinés à détecter en série dans le temps des composantes lumineuses émergeant d'échantillons par les premier et second faisceaux de rayonnements en utilisant le même détecteur de lumière ;
- des premiers moyens optiques pour, lorsque le premier faisceau de rayonnement est projeté, guider sélectivement une composante lumineuse ayant une première caractéristique optique, émergeant de l'échantillon vers ledit détecteur de lumière ; et
- des seconds moyens optiques pour, lorsque le second faisceau de rayonnement est projeté, guider sélectivement une composante lumineuse ayant une seconde caractéristique optique, émergeant de l'échantillon vers ledit détecteur de lumière.

2. Appareil selon la revendication 1, dans lequel
lesdits moyens de sélection optique comprennent un élément de sélection optique, disposé dans un premier chemin optique s'étendant de la première position jusqu'audit détecteur de lumière, pour sélectionner la composante lumineuse ayant la première caractéristique optique, et un autre élément de sélection optique, disposé dans un second chemin optique s'étendant de la seconde position jusqu'audit détecteur de lumière, pour sélectionner la composante lumineuse ayant la seconde caractéristique optique.

3. Appareil selon la revendication 2, dans lequel
un premier diaphragme est disposé dans le premier chemin optique en une position conjuguée avec la première position, un second diaphragme est disposé dans le second chemin optique en une position conjuguée avec la seconde position, et ledit détecteur de lumière est disposé dans une position conjuguée avec les premier et second diaphragmes.

4. Appareil selon la revendication 3, dans lequel
lesdits éléments de sélection optique sont disposés dans des chemins optiques s'étendant desdits premier et second diaphragmes jusqu'audit détecteur de lumière.

5. Appareil selon l'une quelconque des revendications 1 à 4, dans lequel
lesdits moyens de sélection optique comprennent des moyens destinés à diviser un chemin optique s'étendant des première et seconde positions jusqu'audit détecteur de lumière en premier et second chemins optiques, pour, lorsque l'échantillon passe par la première position, sélectionner le premier chemin optique, et pour, lorsque l'échantillon passe par la seconde position, sélectionner le second chemin optique.

6. Appareil selon la revendication 5, dans lequel
lesdits moyens de sélection optique comprennent un ensemble formé d'un premier élément de sélection optique et d'un premier obturateur, et un ensemble formé d'un second élément de sélection optique et d'un second obturateur, qui sont disposés en face dudit détecteur de lumière dans le chemin optique pour diviser le chemin optique, et des moyens pour, lorsque l'échantillon passe par la première position, commander l'ouverture dudit premier obturateur et la fermeture du second obturateur, et pour, lorsque l'échantillon passe par la seconde position, commander la fermeture du premier obturateur et l'ouverture du second obturateur.

7. Appareil selon l'une quelconque des revendications 1 à 6, dans lequel
lesdits moyens d'irradiation comprennent une première source de lumière destinée à générer un premier faisceau de rayonnement, et une seconde source de lumière destinée à générer le second faisceau de rayonnement.

8. Appareil selon l'une quelconque des revendications 1 à 7, dans lequel
lesdits moyens d'irradiation comprennent des moyens destinés à diviser un faisceau de rayonnement provenant d'une source de lumière en deux faisceaux lumineux pour générer les premier et second faisceaux de rayonnements.

9. Appareil selon l'une quelconque des revendications précédentes, dans lequel
lesdits moyens d'irradiation comprennent une source de lumière à laser.

10. Appareil selon l'une quelconque des revendications précédentes, dans lequel
les premier et second faisceaux lumineux ont des longueurs d'ondes différentes.

11. Appareil selon l'une quelconque des revendications précédentes, dans lequel
la caractéristique optique est une longueur d'onde de la lumière.

12. Appareil selon l'une quelconque des revendications précédentes, dans lequel
la caractéristique optique est un état de polarisation de lumière.

13. Appareil selon l'une quelconque des revendications précédentes, dans lequel
l'échantillon comporte une cellule.

14. Appareil selon l'une quelconque des revendications précédentes, dans lequel
l'échantillon comporte une particule porteuse.

15. Appareil selon l'une quelconque des revendications précédentes, comportant en outre
des moyens de mémorisation destinés à mémoriser une valeur détectée par lesdits moyens de détection de lumière, en tant que donnée de mesure.

16. Appareil selon la revendication 15, comportant en outre des moyens d'analyse destinés à analyser les échantillons sur la base des données mémorisées dans lesdits moyens de mémorisation.

17. Appareil selon la revendication 16, comportant en outre des moyens de sortie destinés à délivrer en sortie un résultat d'analyse dudit moyen d'analyse.

18. Appareil selon l'une quelconque des revendications précédentes, comportant en outre
des moyens destinés à former un écoulement enveloppant pour permettre séquentiellement à des échantillons individuels de le traverser.

19. Appareil de mesure d'échantillon selon l'une quelconque des revendications précédentes, dans lequel
les moyens d'irradiation comprennent un premier moyen d'irradiation destiné à générer le premier faisceau de rayonnement, et un second moyen d'irradiation destiné à générer un second faisceau de rayonnement ;
des moyens de détermination sont prévus pour déterminer le passage de plusieurs échantillons par des première et seconde positions sensiblement en même temps ; et
des moyens de détection sur la base d'un résultat de détermination desdits moyens de détermination sont prévus.

20. Appareil selon la revendication 19, dans lequel
lesdits moyens de détermination comprennent : des moyens destinés à détecter de façon indépendante un temps auquel l'échantillon passe par la première position, et un temps auquel l'échantillon passe par la seconde position, et à comparer les deux temps.

21. Appareil selon la revendication 19, dans lequel
lesdits moyens de détermination comprennent :
un moyen destiné à détecter un temps auquel l'échantillon passe par la première position ; et
un moyen destiné à détecter s'il passe ou non un autre échantillon par la première position dans une période prédéterminée à partir du temps détecté.

22. Appareil selon l'une quelconque des revendications 19 à 21, comportant
des moyens de détection de vitesse destinés à détecter une vitesse de déplacement de l'échantillon sur la base d'une différence de temps entre les temps de passage de l'échantillon par les première et seconde positions.

23. Appareil selon la revendication 22, comportant en outre des moyens de commande destinés à renvoyer par rétro-action la vitesse de déplacement détectée par lesdits moyens de détection de vitesse et à commander lesdits moyens destinés à déplacer les échantillons pour maintenir une vitesse de consigne.

24. Appareil selon la revendication 22 ou 23, dans lequel
lesdits moyens de détection de vitesse comprennent :
un moyen destiné à détecter un temps auquel l'échantillon passe par la première position ;
un moyen destiné à détecter un temps auquel l'échantillon passe par la seconde position ;
un moyen destiné à calculer la vitesse de déplacement sur la base d'une différence entre les deux temps détectés.

25. Appareil selon l'une quelconque des revendications 19 à 24, comportant :
des moyens de commande destinés à commander une présence/absence d'opérations desdits premier et second moyens d'irradiation en fonction du mode de mesure établi.

26. Appareil selon la revendication 25, dans lequel
lesdits moyens de commande commutent entre un mode pour faire fonctionner l'un desdits premier et second moyens d'irradiation, et pour mettre hors d'action l'autre moyen d'irradiation, et un mode pour faire fonctionner ensemble lesdits premier et second moyens d'irradiation en fonction du mode de mesure établi par lesdits moyens d'établissement.

27. Appareil selon la revendication 26, dans lequel
lesdits premier et second moyens d'irradiation comprennent des sources de lumière à laser, lorsque le moyen d'irradiation est hors d'action, ladite source de lumière à laser est réglée dans un mode en veilleuse, ou bien une source d'alimentation en énergie de ladite source de lumière est coupée.

28. Appareil selon l'une quelconque des revendications précédentes, comportant des moyens de commutation de niveau destinés à commuter des niveaux de détection entre une détection de la composante lumineuse ayant la première caractéristique optique et une détection de la composante lumineuse ayant la seconde caractéristique optique.

29. Appareil selon la revendication 28, dans lequel
lesdits moyens de commutation de niveau comprennent des éléments d'étranglement des passages de lumière disposés dans des chemins optiques desdits premiers et seconds moyens optiques.

30. Appareil selon la revendication 28, dans lequel
lesdits moyens de commutation de niveau comprennent des moyens destinés à commuter la sensibilité de détection dudit détecteur de lumière.

31. Appareil selon la revendication 28, comportant en outre :
des moyens de détermination destinés à déterminer le passage de plusieurs échantillons par des première et seconde positions, sensiblement en même temps ; et
des moyens destinés à annuler une détection par ledit détecteur de lumière sur la base du résultat d'une détermination desdits moyens de détermination.
